# EUROPEAN PATENT APPLICATION

(11) **EP 4 175 096 A1**
(43) Date of publication of application: **03.05.2023**
(21) Application number: 21465558.1
(22) Date of filing: 02.11.2021
(51) Int. Cl.: H02H 3/20, H02H 9/04, H02H 11/00, H02J 7/00

(54) **OVERVOLTAGE PROTECTION CIRCUIT AND ELECTRICAL DEVICE**

(71) Applicant: Continental Automotive Technologies GmbH, 30165 Hannover (DE)
(72) Inventor: Gherasim, Natanael, 90411 Nürnberg (DE)
(74) Representative: Continental Corporation

(57) **Abstract**

The invention relates to an overvoltage protection circuit. An n-channel MOSFET is used together with further discrete electrical components. No integrated circuits are used for controlling the n-channel MOSFET of the overvoltage protection circuit.

## Description

### Technical field

The present invention relates to an overvoltage protection circuit. The present invention further relates to an electrical device with an overvoltage protection circuit. In particular, the present invention relates to an enhanced, efficient overvoltage protection circuit.

### Background

Modern electrical devices have high requirements regarding quality of an input voltage. For example, it has to be ensured that the input voltage does not exceed a predetermined maximum voltage level. For this purpose, overvoltage protection filters may be used. Such overvoltage protection filters may limit a voltage provided to an electrical device or may even switch off the power supply to the electrical device if an input voltage exceeds a predetermined voltage level.

Standard overvoltage filters used in automotive or consumer products usually are based on a high side switch with a p-channel MOS element. However, such solutions on p-channel technology MOSFET may have a relative high voltage drop. This may lead to relative high power losses and consequently to low efficiency.

Furthermore, MOSFET elements used in overvoltage protection circuits usually are controlled and operated by means of integrated circuits. However, complex integrated circuits are relative. Further to this, configuration of overvoltage protection arrangements using integrated circuits may be limited by the constraints of the integrated circuits.

Thus, there is a need for a versatile, enhanced, robust, flexible and cheap overvoltage protection arrangement.

### Summary

The present invention therefore provides an overvoltage protection circuit and an electrical device with the features of the independent claims. Further advantageous embodiments are subject matter of the dependent claims.

According to a first aspect, an overvoltage protection circuit is provided. The overvoltage protection circuit comprises an input terminal, an output terminal, an n-channel MOSFET and a control circuit. The input terminal may receive an input voltage. For example, the input terminal may be electrically connected to a power source such as a DC supper supply network. The output terminal may provide an output voltage, in particular an overvoltage protected DC output voltage. Accordingly, the output terminal may be connected to an electrical load. A drain terminal of the n-channel MOSFET is electrically coupled to the input terminal. A source terminal of the n-channel MOSFET is electrically coupled to the output terminal. The control circuit is configured to monitor the input voltage. Additionally or alternatively, the control circuit may be configured to monitor the output voltage. The control circuit may provide a control signal to a gate terminal of the n-channel MOSFET. In particular, the control signal may be provided based on a voltage level of the monitored input voltage and/or output voltage. Accordingly, the n-channel MOSFET may be controlled such that the output voltage does exceed a predetermined voltage level. The control circuit of the overvoltage protection circuit comprises only discrete electrical components. Hence, the overvoltage protection circuit and in particular the control circuit does not comprise integrated circuits at all.

According to a further aspect, an electrical device is provided. The electrical device comprises an overvoltage protection circuit according to the first aspect and a DC/DC-converter. An input of the DC/DC-converter is electrically connected to the output terminal of the overvoltage protection circuit. The DC/DC-converter is configured to convert the input voltage provided by the overvoltage protection circuit to an output voltage having a predetermined voltage level.

The present invention is based on the finding that an input voltage of many devices has to be protected against overvoltage. For this purpose, different types of overvoltage protection filters may be used. Depending on the components used in such overvoltage protection filters, relative high power losses have to be expected. Further to this, a use of integrated circuits in an overvoltage filter may limit the capabilities of the overvoltage filter based on the constraints of the respective integrated circuit. Additionally, integrated circuits for controlling an overvoltage filter usually are relative expensive.

The present invention therefore takes into account this finding and aims to provide an enhanced overvoltage protection arrangement. In particular, the present invention aims to provide a versatile overvoltage protection arrangement which can be configured very flexible. As the overvoltage protection arrangement according to the present invention only requires discrete electrical components, the arrangement can be realized very flexible and cheap. Additionally, the use of an n-channel MOSFET may lead to smaller power losses compared to a p-channel MOSFET. Accordingly, the efficiency of the overvoltage protection arrangement can be enhanced, too.

Since the whole arrangement of the circuit for controlling the overvoltage protection arrangement is realized only by discrete components such as resistors, capacitors or diodes, together with an n-channel MOSFET, such an arrangement can be realized with very low costs. Further to this, the individual components can be precisely adapted to the requirements of a respective application. Accordingly, it is possible to adapt the overvoltage protection arrangement very precisely to the requirements and constraints for each application, individually. Since no integrated circuits are used in such an overvoltage protection arrangement, no constraints of an integrated circuit have to be considered. This allows a more flexible configuration of the overvoltage protection arrangement. Further to this, integrated circuits in the market usually are relative expensive. This may lead to high costs of the whole overvoltage protection filter using such integrated circuits. Moreover, discrete electric components usually are very robust compared to integrated circuits. Accordingly, the lifetime and the availability of the arrangement can be improved.

According to an embodiment, the n-channel MOSFET has a maximum drain-source voltage (Vds) of at least 150 Volts. Even though the maximum drain-source voltage of an n-channel MOSFET may be a little bit smaller than a p-channel MOSFET which are used in comparable overvoltage filters. However, the properties of the n-channel MOSFETS may be still sufficient of most applications. At the same time, n-channel MOSFETS require a smaller size and also have lower power losses. Accordingly, the efficiency of an overvoltage protection arrangement with an n-channel MOSFET may be significantly higher compared to an arrangement with a p-channel MOSFET.

In a possible embodiment, the control circuit comprises an overvoltage detection circuit. The overvoltage detection circuit of the control circuit may be configured to provide a control voltage to the gate terminal of the n-channel MOSFET. In particular, the control voltage may be provided to the gate of the n-channel MOSFET, if the input voltage or the output voltage exceeds a predetermined voltage level. Accordingly, the operation of the n-channel MOSFET and the related overvoltage protection may be controlled based on the control signal of the overvoltage detection circuit.

According to an embodiment, the overvoltage detection circuit may comprise an overvoltage detection component. The overvoltage detection component may be electrically connected to the source terminal of the n-channel MOSFET. Accordingly, the overvoltage protection is performed based on a voltage level of the output voltage.

According to an alternative embodiment, the overvoltage detection circuit comprises an overvoltage detection component which is electrically connected to the drain terminal of the n-channel MOSFET. In this configuration, the overvoltage detection and protection is performed based on the input voltage.

According to an embodiment, the overvoltage detection component comprises a Zener-diode. A Zener-diode may be a very reliable but also low-cost component for precisely configuring the voltage level of the overvoltage protection.

According to an embodiment, the overvoltage detection circuit comprises a reset terminal. The reset terminal is configured to provide a reset signal to an external load. In particular, the reset signal may be provided to the external load, if an overvoltage is detected by the overvoltage detection circuit. In this way, a load which is provided by the overvoltage protected output voltage may be reset to a specific state, for example an initial state after detecting an overvoltage event.

In a possible embodiment, the control circuit may comprise an activation circuit. The activation circuit may be electrically coupled to the input terminal. Alternatively, the activation circuit may be electrically connected to the output terminal of the overvoltage protection circuit. The control circuit may be configured to increase the voltage level of the input voltage or output voltage. In this way, a voltage level can be generated which is higher than the voltage level of the input or output voltage.

In a possible embodiment, the activation circuit comprises two diodes and two capacitors. The two diodes may be connected in series with connection node between the two diodes. A terminal of the first capacitor may be connected to this connection node between the two diodes. The second capacitor may be connected in parallel to the serial arrangement of the two diodes. In this way, a voltage enhancement can be achieved by periodically switching a second terminal of the first capacitor between two voltage levels.

In a possible embodiment, a second terminal of the first capacitor is configured to be connected to a clock signal. The clock signal may be a signal which switches periodically between two voltage levels. Accordingly, in a first stage of the clock signal, the capacitor may be charged through the first one of the two diodes and subsequently, the capacitor is discharged through the other diode.

In a possible embodiment, the output terminal of the overvoltage protection circuit is configured to be connected to a DC/DC-converter. If the output terminal is connected to a DC/DC-converter, the second terminal of the first capacitor may be electrically coupled with the DC/DC-converter to receive a clock signal of the DC/DC-converter. Accordingly, the clock signal of the DC/DC-converter can be used to enhance the voltage of the activation circuit.

In a possible embodiment, the DC/DC-converter may comprise a step-up converter. Additionally or alternatively, the DC/DC-converter may comprise a step-down converter. In particular, the DC/DC-converter may be a step-up and step-down converter.

### Brief description of the drawings

In the following, the present invention is described in more detail in connection with the accompanying drawings, wherein:
Fig. 1: shows a schematic block diagram of an overvoltage protection circuit according to an embodiment;
Fig. 2: shows a circuit diagram of an overvoltage protection circuit according to an embodiment;
Fig. 3: shows a circuit diagram of an overvoltage protection circuit according to another embodiment; and
Fig. 4: shows a schematic circuit diagram of an overvoltage protection circuit according to still another embodiment.

### Description of embodiments

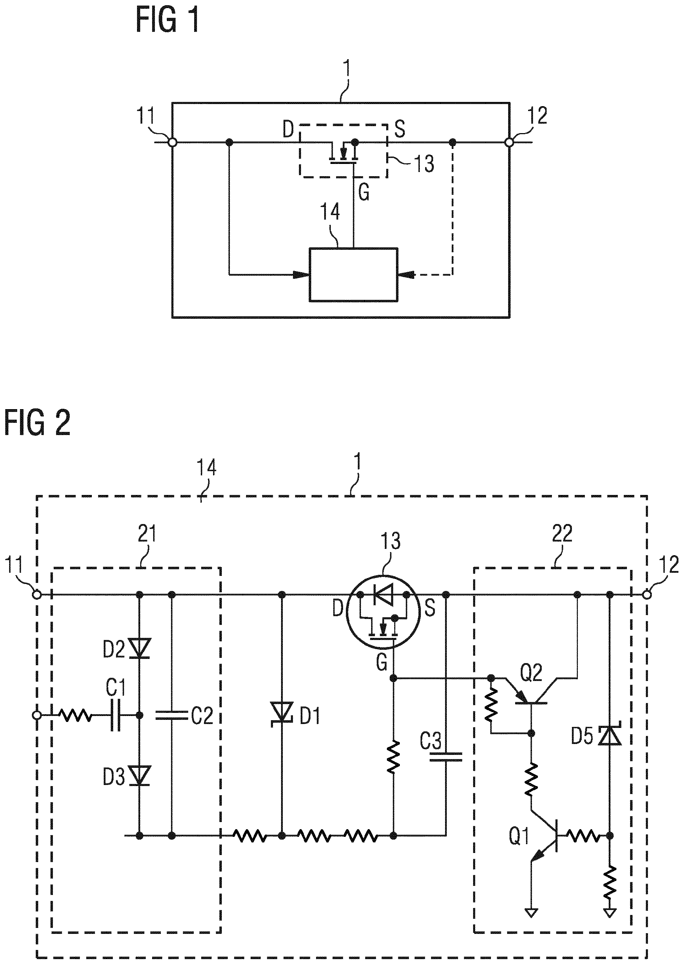

Figure 1 shows a schematic block diagram of an overvoltage protection circuit 1 according to an embodiment. The overvoltage protection circuit 1 comprises an input terminal 11 and an output terminal 12. The input terminal 11 may be connected to a power source, in particular a direct current (DC) power source. For example, the input terminal 11 may be connected to a DC power supply network, e.g. a power supply network of a vehicle. However, any other DC power supply may be possible, too.

Output terminal 12 may be connected to an electrical load 2. For example, output terminal 12 may be connected to an electrical load of a vehicle. In particular, output terminal 12 may be connected to a DC/DC-converter. The DC/DC-converter may convert the output voltage provided at the output terminal 12 of the overvoltage protection circuit 1 to a voltage which is appropriate for a further device connected to the output of the DC/DC-converter. However, any other kind of electrical load may be also connected to the output terminal 12 of the overvoltage protection circuit 1.

The overvoltage protection circuit 1 comprises an n-channel MOSFET 13 and a control circuit 14. A drain terminal D of the n-channel MOSFET may be connected to the input terminal 11 of the overvoltage protection circuit 1. If appropriate, a diode or the like may be arranged at the input terminal 11. A source terminal S of the n-channel MOSFET 13 is connected to the output terminal 12 of the overvoltage protection circuit 1. Accordingly, the n-channel MOSFET 13 controls the electrical power from the input terminal 11 to the output terminal 12. A gate terminal G of the n-channel MOSFET 13 is provided with an appropriate control signal from control circuit 14. For this purpose, control circuit 14 may monitor the input voltage provided at the input terminal 11. Alternatively, the control signal for controlling the n-channel MOSFET 13 may be generated by the control circuit 14 based on the output voltage provided at the output terminal 12. Accordingly, control circuit 14 may detect an overvoltage condition in the monitored input and/or output voltage and control the state of the n-channel MOSFET 13 such that no overvoltage is provided at the output terminal 12. For this purpose, the n-channel MOSFET 13 may be controlled such that a power from the input terminal 11 to the output terminal 12 is interrupted when detecting an overvoltage in the monitored input or output signal. For example, n-channel MOSFET 13 may be controlled such that the connection between the drain terminal D and the source terminal S is fully or partially interrupted when detecting an overvoltage condition.

As will be described in more detail below, control circuit 14 for providing the control signal to the gate terminal G of the n-channel MOSFET 13 comprises only discrete components such as resistors, capacitors, diodes, transistors or the like. Accordingly, no integrated circuits are required for monitoring the voltage and controlling the operation of the n-channel MOSFET 13.

Figure 2 shows a circuit diagram of an overvoltage protection circuit 1 according to an embodiment. As already mentioned above, a drain terminal D of the n-channel MOSFET 13 is connected to the input terminal 11 of the overvoltage protection circuit 1. A source terminal S of the n-channel MOSFET 13 is connected to the output terminal 12 of the overvoltage protection circuit. Control circuit 14 comprises only discrete components such as resistors, diodes, capacitors or transistors.

Control circuit 14 includes an overvoltage detection unit 22. The overvoltage detection unit 22 controls the voltage level applied to the gate terminal G of the n-channel MOSFET 13 based on a voltage level of the output voltage provided at output terminal 12. As can be seen in figure 2, a diode D5, for example a Zener-diode is connected with one terminal to the output terminal 12. The other terminal of the diode D5 is coupled to a first transistor Q1. The output of this first transistor Q1 controls a second transistor Q2. The output of the second transistor Q2 is provided to the gate terminal G of the n-channel MOSFET 13. Accordingly, the signal applied to the gate terminal G of the n-channel MOSFET 13 is changed if the voltage at the output terminal 12 exceeds a predetermined level, wherein the predetermined level can be adjusted based on the selection of Zener-diode D5.

Control circuit 14 further comprises an activation unit 21. The activation unit 21 may comprise two diodes D2 and D3 which are connected in series. Accordingly, the two diodes D2 and D3 are connected with each other at a connection node. Further, first terminal of a capacitor C1 is also connected to this connection node. A second capacitor C2 is connected in parallel to the two diodes D2 and D3. By applying a clock signal, for example a clock signal with a rectangular shape, at the other terminal of the capacitor C1 which is connected to the connection node between the two diodes, it is possible to charge the capacitor C2 parallel to the two diodes D2, D3 to a voltage level higher than the voltage level of the input voltage applied at the input terminal 11. In this way, the arrangement of activation unit 21 may act as a voltage pump which almost doubles the input voltage applied at input terminal 11. Further, the voltage over C2 is forwarded over some resistors to C3.

In the above-described example, the input voltage applied to input terminal 11 is used as input voltage of activation unit 21. In an alternative embodiment, it may be also possible to use the output voltage provided to output terminal 12. In this case, the respective component of the activation unit 21 are electrically connected to output terminal 12 / source terminal S of n-channel MOSFET 13.

The enhanced voltage may be applied via some resistors to the gate terminal G of the n-channel MOSFET 13. In this way, the operation of the overvoltage control circuit 1 can be controlled. Especially, the voltage over capacitor C3 may be used as a pre-booster for the gate voltage in case of decent transition input voltage conditions.

The output voltage applied at output terminal 12 may be provided to any kind of load. For example, output terminal 12 may be connected to a DC/DC-converter 2. This DC/DC-converter may be, for example, a step-up converter and/or a step-down converter. In such a case, the clock signal used in the DC/DC-converter may be provided at clock signal at the capacitor C1 connected to the connection node between the diodes D2 and D3 of the activation unit 21.

In this way, a power supply module for the electrical device could be realized by the overvoltage protection circuit 1 and a DC/DC-converter 2. Such a configuration with over voltage protection 1 and DC/DC-converter 2 may be used for any kind of electronic device. In particular, the before mentioned arrangement may be used for electronic devices of a vehicle. Accordingly, the respective electronic devices may be protected against overvoltage in the DC power supply network of the respective vehicle.

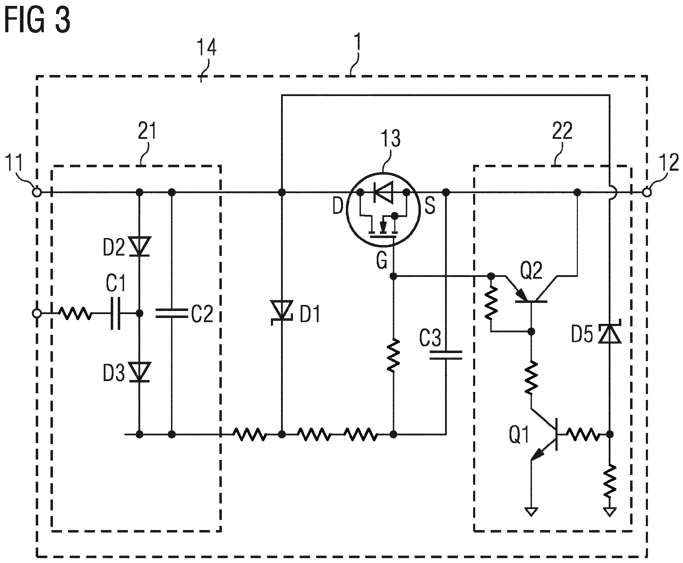

Figure 3 shows a circuit diagram of an overvoltage protection circuit 1 according to another embodiment. The embodiment according to figure 3 mainly corresponds to the previously described embodiment. Thus, all explanations in connection with figure 2 may be also relevant for figure 3 if applicable. The embodiment according to figure 3 differs from the previously described embodiment in that the Zener-diode D5 of the overvoltage detection unit 22 is connected to the input voltage, i.e. input terminal 11 or the gate terminal G of the n-channel MOSFET 13. In this way, the overvoltage functionality of the overvoltage protection circuit 1 is activated based on the input voltage.

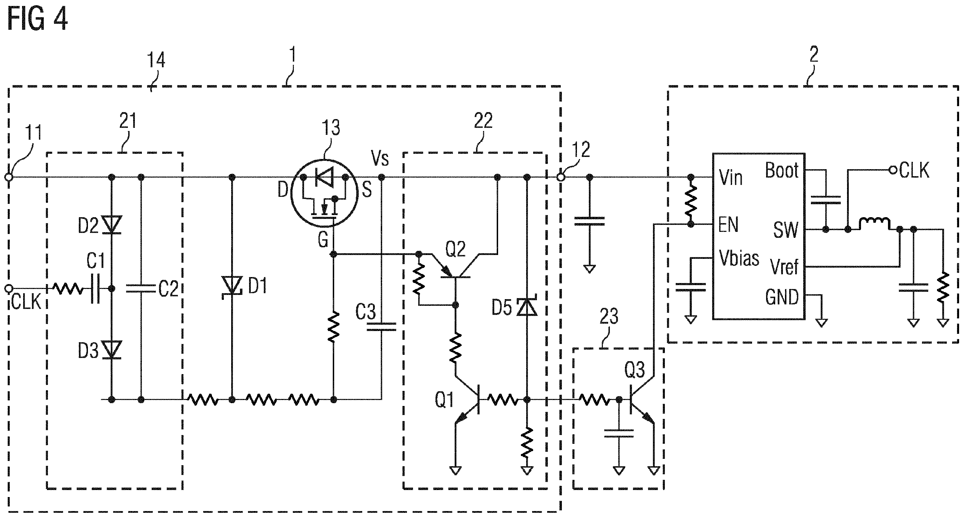

Figure 4 shows a further circuit diagram of an overvoltage protection circuit according to an embodiment. The configuration according to figure 4 mainly corresponds to the previously described embodiments. Thus, the explanations as already provided above in connection with figure 2 and figure 3 also may apply to the embodiment according to figure 4.

The embodiment according to figure 4 mainly differs from the previously described embodiments in that the embodiment according to figure 4 further comprises a reset unit 23. This reset unit 23 may generate a reset signal if an overvoltage condition is detected. For this purpose, a terminal of the Zener-diode D5 may be connected to a further transistor Q3. An output of this further transistor Q3 may be connected to a terminal for providing a reset signal. This reset signal may be used by a connected load in order to receive a reset condition. Hence, the connected load may be reset based on such a reset signal, if the voltage over the Zener-diode D5 exceeds the predetermined voltage.

Summarizing, the present invention relates to an overvoltage protection circuit. In particular, an n-channel MOSFET is used together with further discrete electrical components. Hence, no integrated circuits are used for controlling the n-channel MOSFET of the overvoltage protection circuit.

### List of Reference Signs

- 1: overvoltage protection circuit
- 2: DC/DC converter

- 11: input terminal
- 12: output terminal
- 13: n-channel MOSFET
- 14: control circuit

- 21: activation unit
- 22: overvoltage detection unit
- 23: control unit

- C1 ... Cn: capacitors
- D1 ... Dn: diodes
- Q1... Qn: transistors

## Claims

1. Overvoltage protection circuit (1), comprising:
an input terminal (11) configured to receive an input voltage;
an output terminal (12) configured to provide an output voltage;
an n-channel MOSFET (13), wherein a drain terminal (D) of the n-channel MOSFET (13) is electrically coupled to the input terminal (11) and a source terminal (12) of the n-channel MOSFET (13) is electrically coupled to the output terminal (9,
a control circuit (14) configured to monitor the input voltage and/or output voltage and provide a control signal to a gate terminal (G) of the n-channel MOSFET (13) based on a voltage level of the input voltage and/or output voltage,
wherein the control circuit (14) comprises only discrete electrical components.

2. Overvoltage protection circuit (1) according to claim 1, wherein the n-channel MOSFET (13) has a maximum drain-source voltage of at least 150 Volts.

3. Overvoltage protection circuit (1) according to claim 1 or 2, wherein the control circuit (14) comprises an overvoltage detection unit (22) configured to provide a control voltage to the gate terminal (G) of the n-channel MOSFET (13), if the input voltage or the output voltage exceeds a predetermined voltage level.

4. Overvoltage protection circuit (1) according to claim 3, wherein the overvoltage detection unit (22) comprises an overvoltage detection component (D5) electrically connected to the source terminal (S) of the n-channel MOSFET (13).

5. Overvoltage protection circuit (1) according to claim 3, wherein the overvoltage detection unit (22) comprises an overvoltage detection component (D5) electrically connected to the drain terminal (D) of the n-channel MOSFET (13).

6. Overvoltage protection circuit (1) according to claim 4 or 5, wherein the overvoltage unit component (D5) comprises a Zener-diode.

7. Overvoltage protection circuit (1) according to any of claims 3 to 6, wherein the overvoltage detection unit (22) comprises a reset terminal, configured to provide a reset signal to an external load, if an overvoltage is detected by the overvoltage detection circuit.

8. Overvoltage protection circuit (1) according to any of claims 1 to 7, wherein the control circuit (14) comprises an activation unit (22) electrically coupled to the input terminal (11) or the output terminal (12) and configured to increase the voltage level of the input voltage or output voltage.

9. Overvoltage protection circuit (1) according to claim 8, wherein the activation unit comprises two diodes (D1, D2) connected in series, a first capacitor (D1) with a first terminal of the first capacitor (C1) connected to a node connecting the two diodes (D1, D2), and a second capacitor (D2) connected in parallel to the series connection of the two diodes (D1, D2).

10. Overvoltage protection circuit (1) according to claim 9, wherein a second terminal of the first capacitor (c1)is configured to be connected to a clock signal.

11. Overvoltage protection circuit (1) according to claim 10, wherein the output terminal (12) is configured to be connected to a DC/DC-converter (2), and wherein the second terminal of the first capacitor (C1) is configured to receive a clock signal of the DC/DC-converter (2).

12. Electrical device, comprising:
an overvoltage protection circuit (1) according to any of claims 1 to 11 and
a DC/DC-converter (2), wherein an input on the DC/DC-converter is electrically connected to the output terminal (12) of the overvoltage protection circuit (1), and wherein the DC/DC converter (2) is configured to convert the input voltage provided by the overvoltage protection circuit (1) to an output voltage having a predetermined voltage level.

13. Electronic device according to claim 12, wherein the DC/DC converter (2) comprises a step-up and/or step-down converter.
